# EUROPEAN PATENT SPECIFICATION

(11) **EP 0 675 429 B1**
(45) Date of publication and mention of the grant of the patent: **24.10.2001**
(21) Application number: 95110123.7
(22) Date of filing: 13.11.1989
(51) Int. Cl.: G06F 5/06, G06F 3/06, H04L 29/06

(54) **Data handling apparatus**
Datenverarbeitungsgerät
Dispositif de traitement de données

(30) Priority: 11.11.1988 JP 28525988; 11.11.1988 JP 28526088
(43) Date of publication of application: 04.10.1995
(62) Divisional of application: 89311716.8
(73) Proprietor: VICTOR COMPANY OF JAPAN, LIMITED, Kanagawa-ku Yokohama (JP)
(72) Inventor: Toguchi, Satoru, Yokohama (JP); Yamamuro, Fumiko, Naka-ku, Yokohama (JP); Tokoro, Kyosuke, Tokyo (JP); Ishida, Satoshi, Yokosuka-shi, Kanagawa-ken (JP); Miyasho, Yasuo, Yokohama (JP)
(74) Representative: Nicholls, Michael John

(56) References cited:
- EP-A- 0 120 330
- EP-A- 0 266 586
- EP-A- 0 573 354
- JAPAN TELECOMMUNICATION REVIEW, vol. 28, no. 4, 1986 TOKYO JP, pages 264-270, YOKOI 'New Video Response System (VRS)'
- PATENT ABSTRACTS OF JAPAN vol. 12 no. 414 (E-677) ,2 November 1988 & JP-A-63 151240 (FUJITSU)
- IBM TECHNICAL DISCLOSURE BULLETIN, vol. 28, no. 9, February 1986 NEW YORK US, pages 4153-4155, AN. 'Multi-spindle file-placement algorithm'

## Description

This invention relates to data handling apparatus for supplying general data, audio and/or video signals in response to an external demand and relates in particular to file storing apparatus.

A filing apparatus is known which comprises a magnetic hard disc apparatus storing plural data which are read and served to plural users in parallel and independently.

In the above-mentioned conventional filing apparatus, it is not ensured that stored data is reproduced in real-time mode or reproduced continuously. Thus, "a file system" of Japanese patent application provisional publication No. 62-235673 comprises: a main memory for storing a data signal including continuous and real-time information; an M-times speed reproduction circuit for reading the data signal from the main memory at a speed M (M ≥ 2) times that for reproducing the data continuously and in real-time mode; a distribution circuit for outputting writing signals with the M-times speed reproduced data signal divided N; temporary memories for storing the writing signal temporarily; real-time reproducing circuits for reproducing the data from output signals of the temporary memories continuously and in real-time mode; and a control circuit for executing the sequential operation of the above-mentioned main storing, M-times speed reproduction, distribution, temporary memory, and real-time reproduction circuits. However, there is a drawback that it is difficult to maintain the service for data without waiting when many terminals are using the data access to the filing apparatus at a time because increase in reading speed is limited. Particularly, if data including real-time information is transmitted in real time base, the above-mentioned drawback is serious because the time rate of occupation of the transmission line by one terminal is high.

The present invention has been developed in order to remove the above-described drawbacks inherent to the conventional filing apparatus.

IBM Technical Disclosure Bulletin vol. 28, no. 9, February 1986, New York, US, pages 4153 - 4155 discloses a multi-spindle file placement algorithm which is a modification of a best fit algorithm and takes into account the history of I/O access to different disk spindles in selecting file placement.

EP-A-0, 120, 330 discloses a file system in which data sets are distributed between different types of storage unit according to their access statistics.

EP-A-0, 266, 586 discloses a disk storage system in which data files are duplicated to provide a backup in the event of hardware failure and write requests to duplicate data are given a low priority.

According to the present invention there is provided a data handling apparatus comprising:
plural filing units each responsive to first and second control signals and control means for controlling said plural file units by generating said first and second control signals; wherein:
   each of said filing units has:
      storing means for storing plural sets of data;
      reading means for reading out desired data from said storing means in response to said first control signal, said reading means reading out plural sets of data in substantially the same period by time division multiplexing; and
      writing means responsive to said second control signal for writing to said storing means data that has been read out for the storing means of another filing unit;
      and wherein said control means is adapted to perform repetitively the steps of:
         maintaining an index for each filing unit by storing the name of data that has been written into the respective storing means;
         detecting the receipt of an external signal demanding desired data;
         sending said first control signal to one of said filing units indicated by said indices to have said desired data stored therein;
         detecting a first frequency representing the number of times said external signal demanding said desired data is received in a given interval;
         detecting a second frequency representing the number of times said first control signal is sent to said one of said filing unit in a given interval; and
         when said first and second frequencies respectively exceed first and second frequency values sending said second control signal to another of said filing units to control storage therein of said data read out from said one filing unit.

The invention will be further described by way of non-limitative example with reference to the accompanying drawings, in which:-
Fig. 1 is a block diagram of a filing apparatus of first and second embodiments of the invention;
Fig. 2 is a block diagram of reading circuit in Fig. 1;
Fig. 3 shows a waveform for explanation of Fig. 2;
Fig. 4A and 4B are flow charts of the first embodiment;
Fig. 5A and 5B are flow charts of the second embodiment;

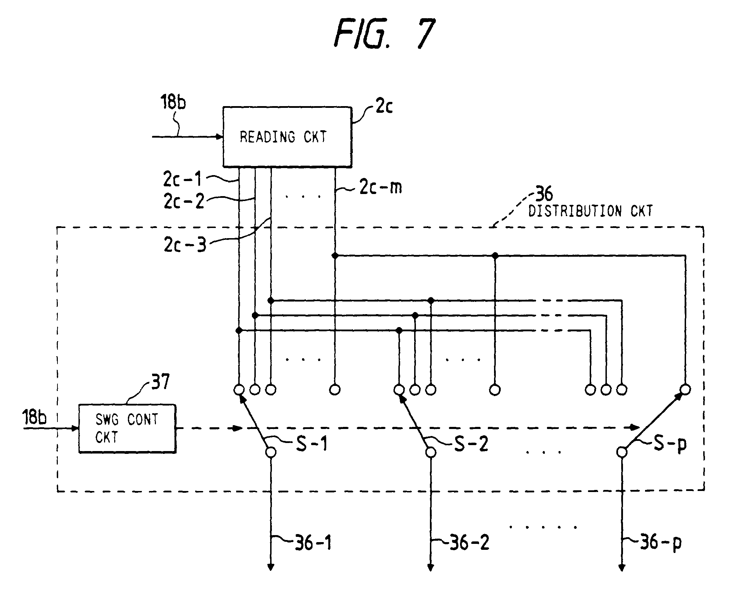

Fig. 6 and 7 are block diagrams of a third embodiment;
Fig. 8A and 8B are a flow chart of a third embodiment;
Fig. 9 is a block diagram of a filing apparatus of fourth embodiment;
Fig. 10 is a block diagram of reading circuit in Fig. 9; and
Fig. 11A, 11B, and 11C are flow charts of the fourth embodiment;

The same or corresponding elements or parts are designated at like references throughout the drawings.

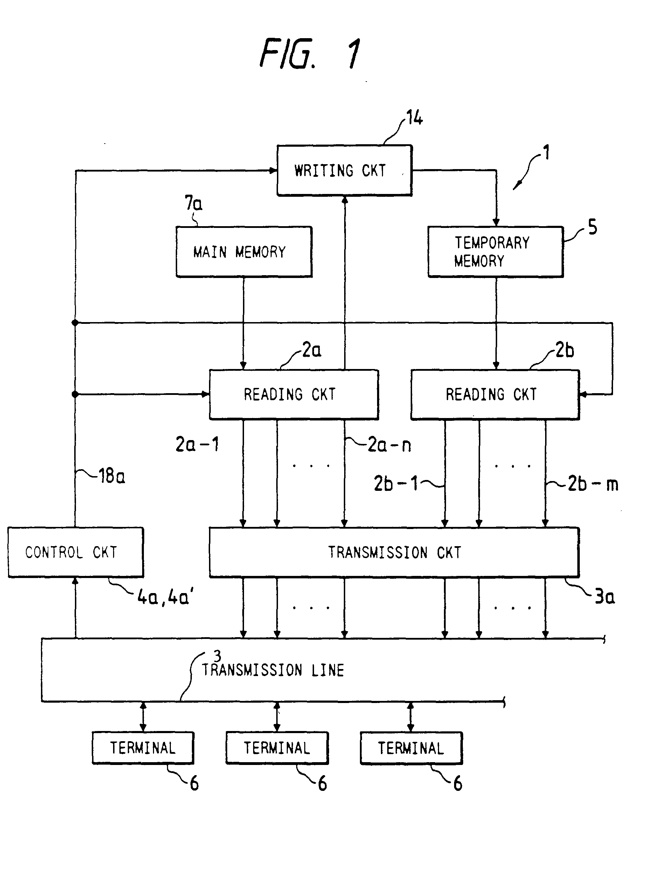

Referring now to the drawings, Fig. 1 is a block diagram of filing apparatus of first and second embodiments of the invention.

In Fig. 1, a main memory (hard disc memory) 7a stores real-time information (data) of music or video image, etc. in every file (unit of storing information). A reading circuit 2a reads data by means of time-divide reading from plural files in the main memory 7a; then time-extends the read data to reproduce a continuous signal of real time base; outputs at plural outputs; and serves the reproduced data through a transmission line 3 via transmission circuit 3a to terminals 6.

The above-mentioned operation is carried out after a terminal 6 sends a demand for a desired data through the transmission line 3 to a control circuit 4a and the control circuit 4a receive the demand. The control circuit 4a has an index which is made when data is stored in the main memory 7a and searches the index for a file of the data demanded for transmission; sends a control signal 18a to the reading circuit 2a to read out data of the desired file to send it to the transmission circuit 3a. As mentioned above, the filing apparatus 1 transmits the desired data read from the main memory 7a in response to a transmission demand from a terminal 6.

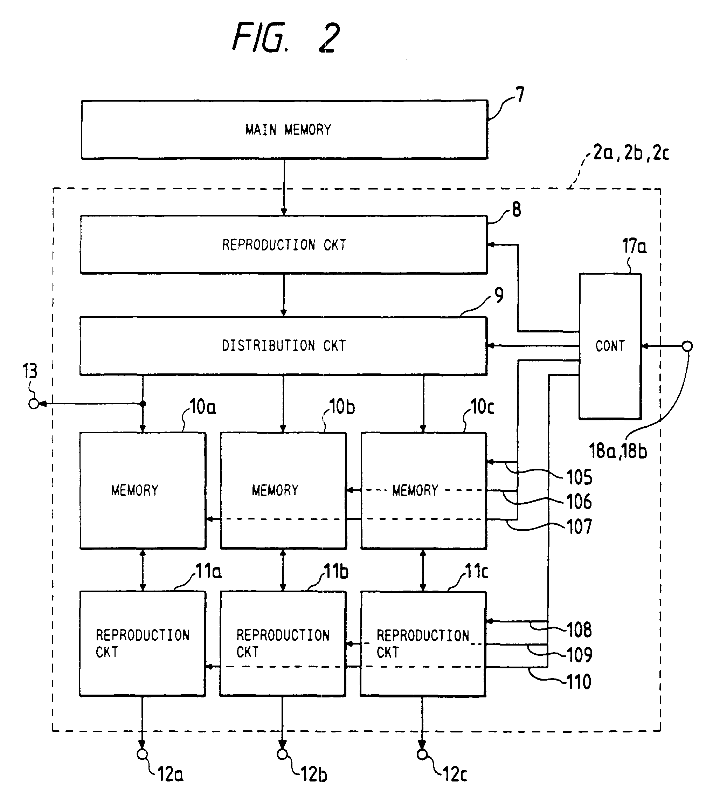

The reading circuits 2a and 2b are described below with referring to Fig. 2 of a block diagram. These reading circuits 2a and 2b have the same structure as that of the "file system" of Japanese patent application provisional publication No. 62-235673. However, there is a difference that an output of the distribution circuit 9 is introduced to a terminal 13 at the reading circuit 2a. The plural sets of data stored in the main memory 7 are read at a speed M times that in real time base by reproduction circuit 8. The distribution circuit 9 distributes plural set of data at output terminals 12a, 12b, and 12c for outputting data signals respectively. The distributed data signals have a form different from the actual one with respect to time base, and they are stored in temporary memories 10a, 10b, and 10c respectively. The stored data signals are extended by real-time reproduction circuits 11a, 11b, and 11c temporarily to reproduce the data signals with the real-time base conversion. These data signals are outputted at output terminals 12a, 12b, and 12c respectively. In the real-time memory 2a, the outputs are sent to the transmission circuit 3a through input/output lines 2a -1 to 2a -n. In this first embodiment, the number of the outputs is three. However, the number M can be increased if the reading speed of the main memory 7 is high. In other words, the number of the outputs is determined by the reading speed of the main memory 7. The controller circuit 17a controls reproduction circuit 8, distribution circuit 9, temporary memories 10a, 10b, and 10c, and real-time reproduction circuits 11a, 11b, and 11c for executing the above-mentioned operation in response to a control signal 18a.

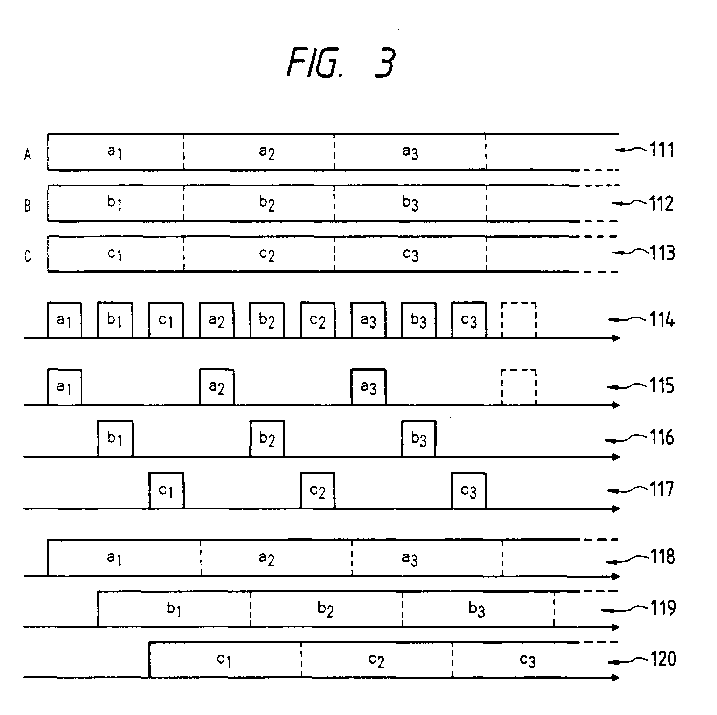

Hereinbelow will be described reproduction operation of the above-mentioned data with reference to Fig. 3. In Fig. 3, the main memory 7 stores data signals (a₁+a₂+a₃+··· ), (b₁+b₂+b₃+··· ),(c₁+c₂+c₃+··· )[see Fig. 3 waveforms 111 to 113] indicative of data A, B, and C which are to be reproduced continuously in real-time base.

At the first period it reads partial data a₁; at the second period, it reads a partial data b₁; at the third period, it read a partial data c₁. This operation is repeated. In other words, the reproduction circuit 8 reads the above-mentioned data (a₁+a₂+a₃+ ··· ) to (c₁+c₂+c₃+ ··· ) with one data divided by every predetermined interval. The reading speed is more than three times the real-time reading. Therefore, the data A, B, and C are read and reproduced, as shown by a waveform 114 in Fig. 3, including reproduction data signals (a₁, b₁, c₁, a₂, b₂, c₂, a₃, b₃, and c₃, ··· ).

The distribution circuit 9 distributes data signals (a₁, b₁, c₁, a₂, b₂, c₂, a₃, b₃, and c₃, ··· ) read from these reproduction circuit 8 signals to memories 10a, 10b, and 10c respectively, as shown in waveforms 115-117. The memory 10a stores the data signals (a₁+a₂+a₃+ ··· ); the memory 10b stores the data signals (b₁+b₂+b₃+ ··· ); and memory 10c stores the data signals (c₁+c₂+c₃+ ··· ), in response to write command pulses 105, 106, and 107 from the controller 17a.

The reproduction circuits 11a, 11b, and 11c reproduce data signals (a₁+a₂+a₃+ ··· ) to (c₁+c₂+c₃+ ··· ), as follows:

The data signals (a₁+a₂+a₃+ ··· ) respectively are intermittently once stored in the memory 10a and then the reproduction circuit 11a reads the data signals (a₁+a₂+a₃+ ··· ) for the interval of storing the data signals (a₁+a₂+a₃+ ··· ) with time-expanding by read command pulses 110. The write command pulses 105, 106, and 107 for the memories 10a, 10b, and 10c is of frequency three times that of the read command pluses 108, 109, and 110 is. The data signals (a₁+a₂+a₃+ ··· ) read with time-expanding forms a real-time base data signal, as shown by a waveform 118.

Similarly, data signals (b₁+b₂+b₃+ ··· ) and (c₁+c₂+c₃+ ··· ) are temporarily stored in the memories 10b, and 10c read by the reproduction circuits 11b and 11c respectively.

A signal at the terminal 13 of the reading circuit 2a is sent to the writing circuit 14. The writing circuit 14 stores the signal from the reading circuit 2a at the temporary memory 5 as the second storing means in response to a control signal 18a. The temporary memory 5 is a known solid-state memory. The reading circuit 2b reads out the data stored in the temporary memory 5 in response to the control signal 18a in the same way as the reading circuit 2a does, and the read data is (are) transmitted to a terminal(s) 6 through the transmission line 3 by the transmission circuit 3a. The reading circuit 2b has the same structure as the reading circuit 2a. Generally, the access time of the solid-state memory is very short, so it is possible to output data with dividing more than ten times that of the main memory 7 including a hard disc.

Hereinbelow will be described the control circuit 4a.

The control circuit 4a outputs the control signal 18a for reading out the desired data d in accordance with the result of searching, for the desired data, an index made when the data is stored in the main memory 7. Next, the control circuit 4a counts up an access frequency. In this case, the access frequency f is obtained by counting the number of transmission of the desired data d for a given interval,i.e., transmission frequency T. When the transmission frequency is larger than a reference value, the control circuit 4a outputs the control signal 18a causing the desired data d to be written into the temporary memory 5. When the transmission frequency is smaller than the reference value, the desired data d is not written. When the desired data d is written, the index for the temporary memory 5 is made, and when next transmission demand for the same desired data d, the control circuit 4a sends the control signal 18a to the reading circuit 2b after it searches the index for the desired data registered in the index of the temporary memory 5 that the desired data d is read out.

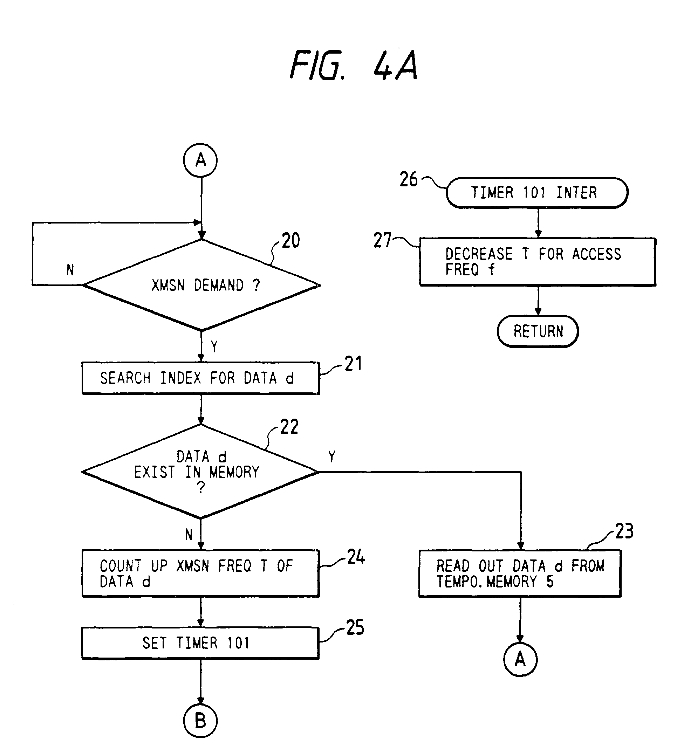

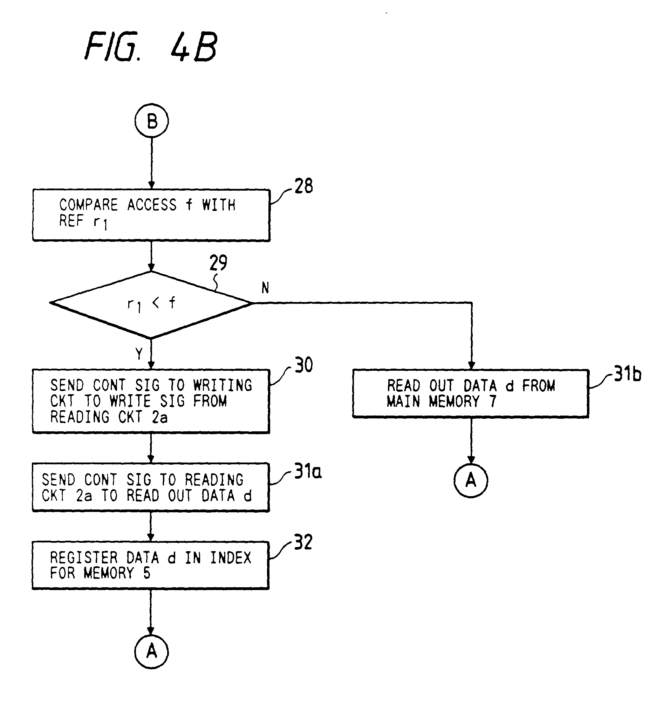

Hereinbelow will be described the above-mentioned operation with reference to a flow chart in Figs. 4A and 4B. The operation of the control circuit 4a is executed by a known microprocessor (cpu) in accordance with the flow chart in Figs. 4A and 4B. In Figs. 4A and 4B, the cpu starts the processing at 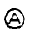 . At the first step 20, the cpu detects a transmission demand from one of terminals 6 through the transmission line 3. When the demand is detected, at step 21, the cpu detects whether the desired data d exists in the temporary memory 5 in accordance with the index made when the above-mentioned writing operation is carried out. When the desired data d exists in the index of the temporary memory, the desired data d is transmitted to a terminal 6 from the temporary memory 5 at step 23. If the desired data d does not exist, the cpu count up the transmission count by one in step 24. In step 25, the cpu starts a timer 101 to operate and enables timer 101 interrupt which is one of known functions of the cpu.

When the given interval of the timer 101 passed, in step 26, the cpu starts a timer 101 interrupt processing where the transmission frequency T is decreased by one. This provides the transmission frequency T for a given interval. On the other hand, the processing proceeds to step 28 from step 25 where the access frequency f is compared with a reference value r₁. If f is equal to or smaller than r₁, the cpu sends a control signal 18a to the reading circuit 2a to read out the desired data d at step 31b. If f is larger than r₁, the cpu sends a control signal 18a to writing circuit 14 to write a signal from the reading circuit 2a in step 30. In step 31a, the cpu sends the control signal 18a to read out the desired data d. In step 32, the cpu registers the name d of the desired data d in the index of the temporary memory 5. Therefore, when a demand for transmitting the above-mentioned desired data d occurs, the desired data d can be read out at the reading circuit 2b from the temporary memory 5. The control signal 18a is a coded signal and each of circuits of Fig. 1 executes its own function in response to the control signal 18a.

As mentioned above, the filing apparatus of the first embodiment of the invention can increase the number of transmitting desired data d to plural terminals 6 at the same time by copying data with higher access frequency, stored in the main memory 7 to the temporary memory 5 by writing circuit 14 because reading speed of temporary memory is faster than that of the main memory 7.

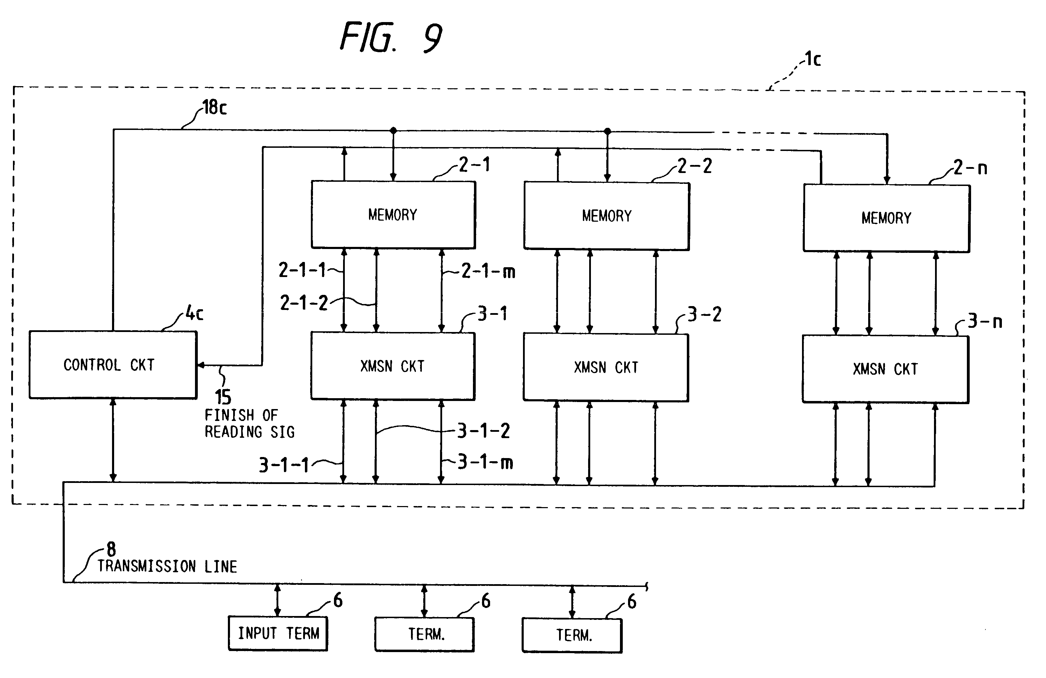

In the above-mentioned embodiment, judgement of block 29 can be done by a present transmission frequency. The present transmission frequency is obtained by that the control circuit 4a enters interrupt processing of block 26 in response to finish of reading signal 15 (see Fig. 9) and sent the data from the reading circuit 2a. Moreover, when access frequency f of data stored in the temporary memory 5 decreases, the data can be written over by other data with higher access frequency. Further, it is possible to write a new data over a data with lower access frequency.

Hereinbelow will be described a second embodiment of the invention.

As the filing apparatus of the second embodiment in structure is the same as that of the first embodiment shown by the block diagram in Fig. 1 except operation of the control circuit 4a. Therefore, a description of structure is omitted except the control circuit 4a'.

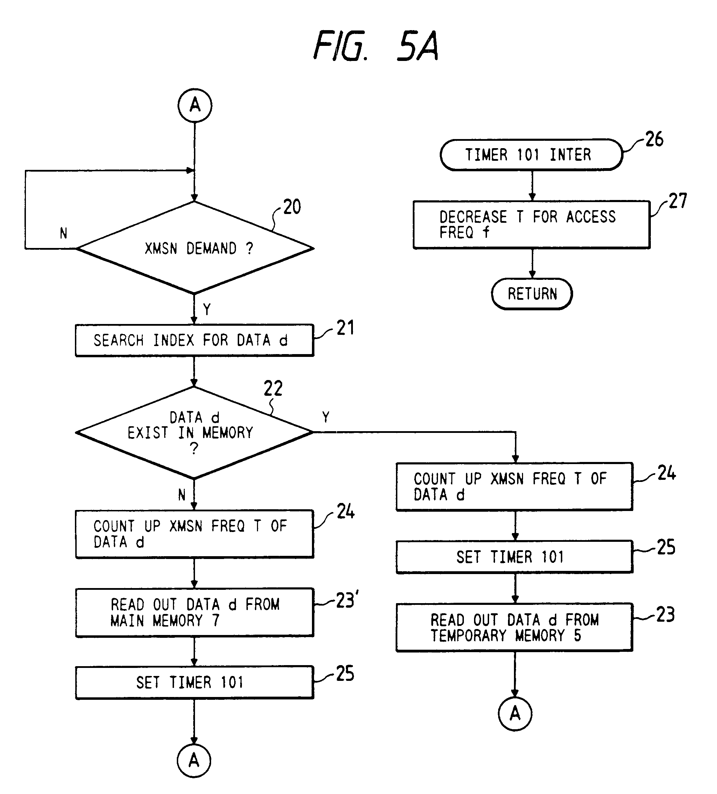

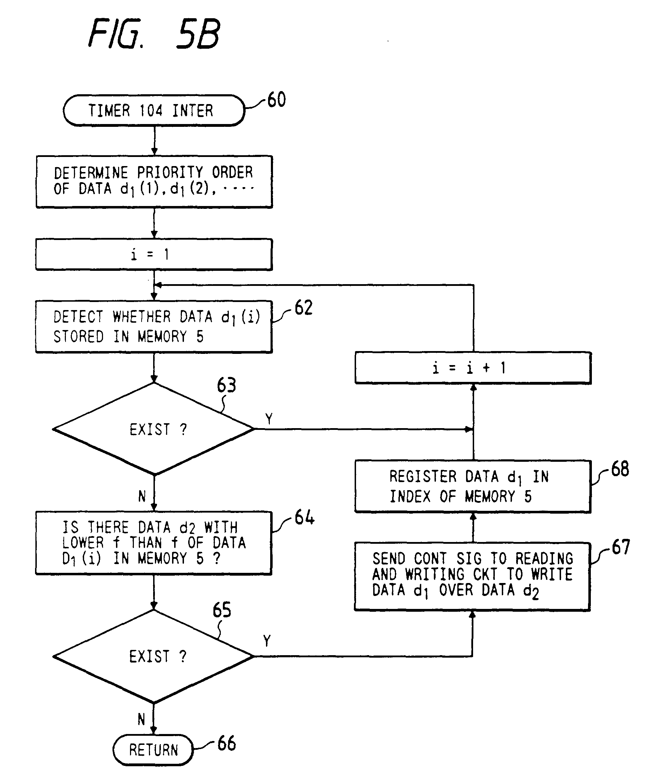

Operation of the control circuit 4a' is described in accordance with a flow chart of Figs. 5A and 5B. The control circuit 4a of the first embodiment writes the desired data d into the temporary memory 5 when access frequency f of the desired data exceeds the reference value r₁. However, in the second embodiment, the cpu writes the data into the temporary memory 5 at every given interval in accordance with access frequency condition. Therefore. description of a flow from steps 20 to 25 is omitted because it is the same as that of Fig. 1. Moreover, steps 24 and 25 are added between steps 22 and 23. These steps provide access frequency when data is outputted from the temporary memory 5.

On the other hand, since copying data into the memory 5 is executed at every given interval, as mentioned above, processing returns to 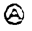 after processing of step 25. Copying data is carried out in response to timer 104 and in accordance with timer 104 interrupt 60, as shown in Fig. 5B. A timer 104 is one of known function of the cpu and set at unshown step for initializing. Therefore, timer 104 interrupt 60 is carried out every given interval. In this processing, the temporary memory 5 stores data d₁ having higher access frequency prior to other data. Firstly, in step 61, the cpu determines a priority order of plural sets of data in the order of high access frequency to low access frequency by comparing the access frequencies .f of plural sets of data in the main memory 7 to each other. In step 62, the cpu detects whether the data d₁(i) is stored in the temporary memory 5 by comparing the data d₁(i) with the index of the temporary memory 5 in the order from the data d₁ with higher order. In step 63, if data d₁(i) exists in the temporary memory 5, processing returns to step 62 and the cpu executes processing for data d₁(i+1) with next order. If data d₁ is not stored in the temporary memory 5, in step 64, the cpu detects a data d₂ stored in the temporary memory 5, having a fewer access frequency than that of the data d₁ in step 65. If the data d₂ cannot be detected, processing returns to the main program via step 66. When the data d₂ is detected, the cpu sends the control signal 18a to reading circuit 2a and writing circuit 14 so that they write data d₁ over data d₂, i.e., over-write data d₁(i) in step 67. In step 68, the cpu registers data d₁(i) in the index of the temporary memory 5. After processing of step 68, processing returns to step 62 for processing for the next order data d₁. Above mentioned processing loop is repeated until the temporary memory is full.

As mentioned above, the filing apparatus of the second embodiment of the invention can increase the number of transmitting desired data d at the same time by arranging data with higher access frequency f at every given interval prior to other data, in the temporary memory 5.

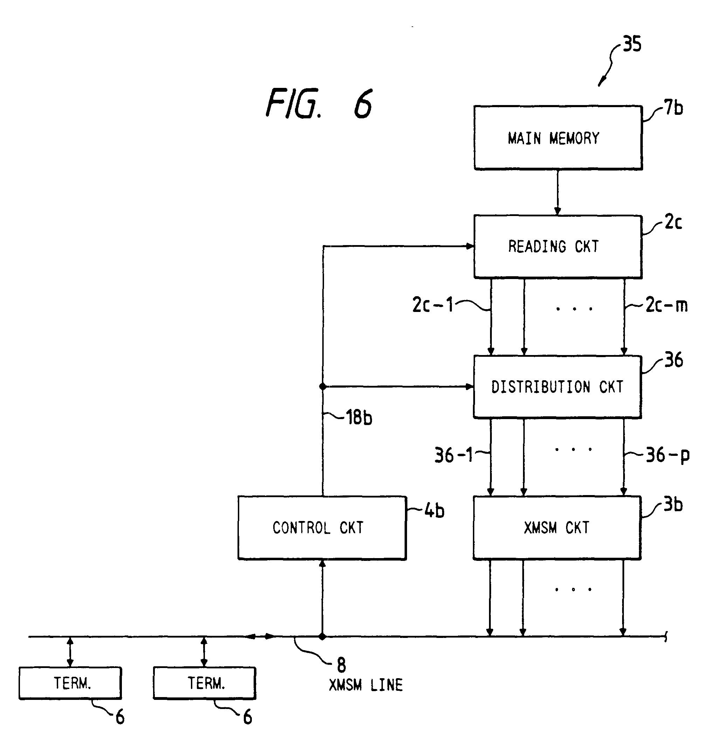

Hereinbelow will be described a third embodiment of filing apparatus of the invention with reference to Fig. 6. Fig. 6 is a block diagram of a filing apparatus of third embodiment of the invention.

In Fig. 6, a filing apparatus 35, comprises a control circuit 4b which sends a control signal 18b to a reading circuit 2c to read out a desired data d in a main memory 7b and to transmit the data d through a transmission line 8 via a distribution circuit 36 and a transmission circuit 3b. When frequency of access of the desired data d increases, waiting time is provided for some demands for transmission, early received by the control circuit 4b. As the main memory 7b, reading circuit 2c, and transmission circuit 3b are the same as elements of the first embodiment, shown by the corresponding references, detailed description of those elements is omitted.

The control circuit 4b which receives transmission demand of a desired data d from one of terminals 6 sends the control signal 18b to the reading circuit 2c to read out the desired data from the main memory 7b. The reading circuit 2c reads out the desired data d from the main memory 7b and sent it to a distribution circuit 36. When frequency of access to the desired data d is small, the control circuit 4b causes the distribution circuit 36 to connect its one input to its one output to distribute the data. For example, a line 2c-1 is connected with an output line 36-1 and then the desired data d is sent to the transmission circuit 3b and is transmitted to the terminal 6. The distribution circuit 36 is a switch circuit where the output lines 36-1 to 36-p are connected with one of lines 2c-1 to 2c-m for distributing the desired data d from the reading circuit 2c. The switches S-1 to S-P are switched over in response to a switching control circuit 37 responsive to the control signal 18b. When access frequency of one data increases, the distribution circuit 36 transfers a signal in the line 2c-1 to the output lines 36-1 and 36-2. The switches S-1 to S-p comprises analog switches or gate circuits.

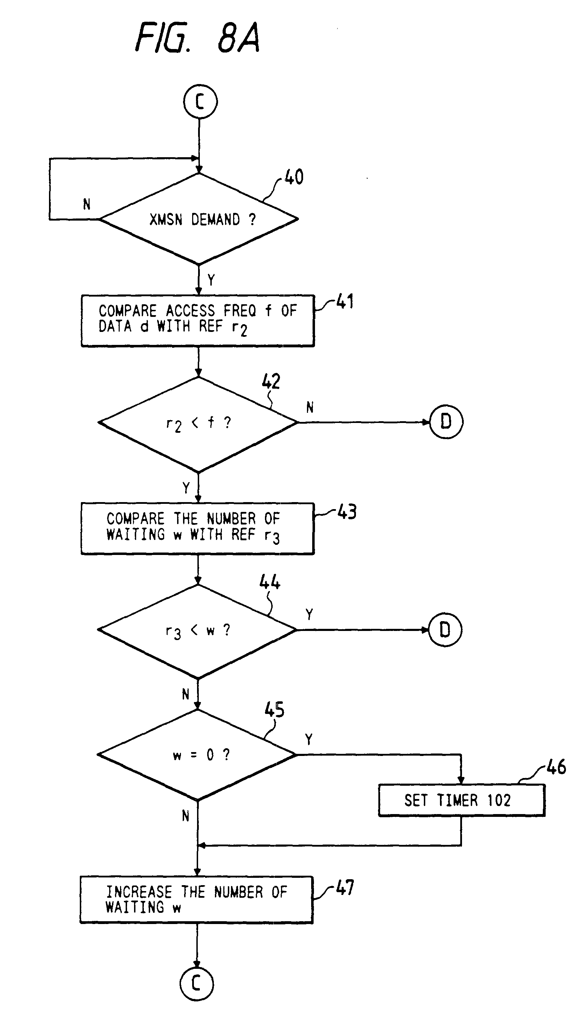

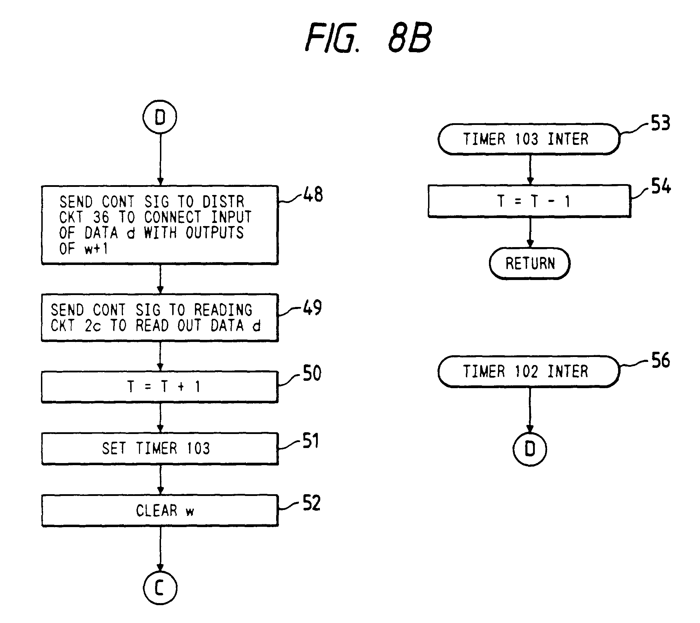

Hereinbelow will be described controlling operation of the control circuit 4b with reference to a flow chart in Fig. 8A and 8B.

At first, the waiting count w and access frequency f are initialized to zero then processing starts at ©. In step 40, the cpu detects a transmission demand from one of terminals 6. If the transmission demand is detected, the cpu compares access frequency f with a reference value r₂ in step 41. If the access frequency f is smaller than the reference value, processing proceeds to 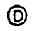 . In step 48, the cpu sends a control signal 18b to the distribution circuit 36 so that one input of the distribution circuit 36 where the desired data d is inputted is connected with outputs of the number of waiting w+1 mentioned latter. As mentioned above w is set to zero at the initializing step, the above-mentioned one input is connected with one output. In step 49, the control circuit 4b sends the control signal 18b to the reading circuit 2b so that the reading circuit 2b reads out the desired data d from the main memory 7 and outputs the desired data d to the above-mentioned one input.

Next, access frequency will be described. In step 50, the number of transmission T is increased by one, i.e., counted up. In step 51, the cpu starts to operate a timer 103 in which a given time period is set, which is provided to each data. When, the given time period has passed, in step 53, timer 103 interrupts processing. In step 54, the number of transmission T is decreased by one. This causes that T is used as access frequency f. As mentioned above, when access frequency f is small, the signal of the desired data d from the reading circuit 2c flows through the distribution circuit 36 is transmitted through one channel of the transmission circuit.

If access frequency f is larger than the reference value r₂ in step 42, the cpu compares the number of waiting w, described latter, of the desired data d with a reference value r₃ in step 43. If it is smaller than the reference value r₃, processing proceeds to block 45.

Here, the number of waiting w will be described. When waiting number w is smaller than the reference value r3, the filing apparatus does not transmits the desired data immediately and waits until another transmission demands for the same data are received. In step 47, the number of waiting w is counted up and processing returns to ©. Then, in step 47, the number of waiting w is further counted up when other transmission demand is received.
This operation is repeated and when the number of waiting w is larger than the reference value r₃, the desired data d is transmitted through plural transmission channels and the number w is cleared in step 52.

In step 45, when the number of waiting w is zero, the cpu starts the timer 102 in which a second given time period is set, to operate in step 46. This is because even though waiting is done, if transmission demand for the same data does not occur soon, the desired data should be transmitted within the given time period. Thus, processing enters the flow of 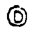 in response to timer 102 interrupt 56 and then the desired data d is transmitted. After processing of step 45 or 46, the cpu counts up the number of waiting w and returns to ©.

Next, in step 44 when the number of waiting w is larger than the reference value r₃, processing enters the flow of 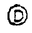 . In step 48, one input to which the desired data d is fed, of the distribution circuit 36 is connected with outputs of the number w+1. The filing apparatus transmits the same desired data d through channels of the number w+1, of the transmission circuit 3b to w+1 terminals at the same time. For example, the reference value r₃ is assumed four, the number w becomes five, then outputs of w+1, i.e., six outputs is connected with one input. Then, the control circuit 4b causes the reading circuit 2c to read out the desired data d and to output it at the above-mentioned input of the distribution circuit 36, as shown step 49.

Next, in steps 50 and 51, the cpu counts up the frequency of transmission T and starts the timer 103 to operate to obtain access frequency f, as mentioned above. In this time, if the desired data d is transmitted to plural terminals at the same time, the number of transmission T is increased by one. In step 52, the waiting number w is cleared since there is no transmission demand under waiting.

As mentioned above, since there is a tendency for possibility of demand by plural terminals for transmitting the same data to increase when the number of terminals demanding the filing apparatus 35 to transmit data, the filing apparatus 35 transmits data having many transmission demands after waiting time has passed. In the above-mentioned description, transmission condition is detected by access frequency f. However, it is possible to detect transmission condition by obtaining the number of present reading out by providing a signal for informing the control circuit 4b of finish of data reading without using timer 103 and by executing block 54.

Referring now to the drawings, Fig. 9 is a block diagram of filing apparatus of a fourth embodiment of the invention.

In Fig. 9, memories 2-1 to 2-n as storing means store information (data) in every file (unit for storing data) and read data from plural files skippingly, i.e., read the data at a high speed by time-divided reading; then reproduce a signal of real time base from read data; and output real-time data signals for example, voice signals from plural outputs in parallel, independently. As the memories 2-1 to 2-n operate as mentioned above, the memories 2-1 to 2-n are referred as to real-time memories.
The memories 2-1 to 2-n are provided plurally. For convenience of explain, only a real-time memory 2-1 is explained. The real-time memory 2-1 stores real-time information in every files, for example, music information or video information and converts the read data into a continuous signal of real-time and outputs the signal. The real-time memory 2-1 can supply plural information from plural files in parallel to individual terminals 6.

The above-mentioned operation is performed after one of terminals 6 sends demand for a desired data to a control circuit 4c through a transmission line 8. The control 4c searches which file stores the desired data and which memory 2-1 to 2-n stores the desired data, in accordance with an index mentioned later, and then sends a control signal 18c to the searched memory to transmit data of the searched file to the above-mentioned terminal 6.

As mentioned above, the above-mentioned filing apparatus transmits the signal of real time mode from real-time memories 2-1 to 2-n to the terminal 6 in response to transmission demand from the terminal.

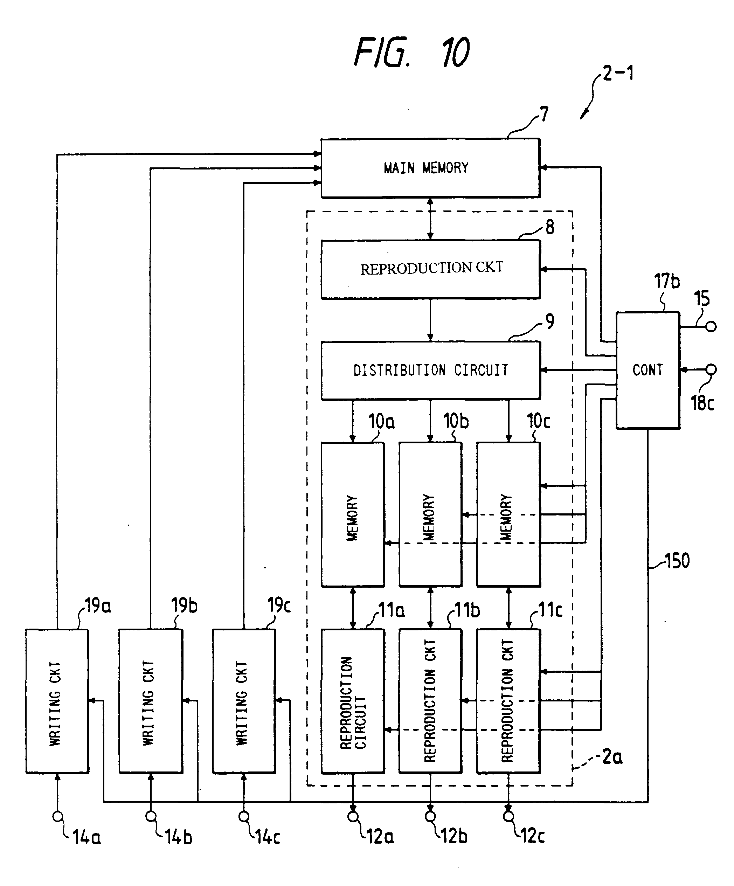

The real-time memory 2-1 to 2-n comprises a main memory 7 and a reading circuit 2a described in first embodiment, as shown in Fig. 10. Thus, the detailed description of the main memory and reading circuit 2a is omitted. The memories 2-1 to 2-n further comprises control circuit 17b which is the same as the control circuit 17a except that the controller 17b sends finish signal for transmitting data and writing circuits 19a-19c. The writing circuits 19a-19c write data fed from terminals 14a-14c into the main memory 7 in response to a control signal 150 from the control circuit 17b once the fed data is stored. The controller 17b sends the control signal 150 in response to a control signal 18c from the control circuit 4c.

As mentioned above, the real-time memory 2-1 can reproduce data having real-time characteristic with the data signal converted in real-time base as well as can store or write an external information. Therefore, it is possible that an information stored in one real-time memory 2-1 to 2-n is transferred or copied to another real-time memory 2-1 to 2-n, or that an information stored in one real-time memory 2-1 to 2-n is exchanged with that stored in another real-time memory 2-1 to 2-n. In this case, in the real-time memory 2-1 to 2-n, spare storing area is provided or spare memory is provided. Moreover, spare input/output lines 2-1-1 to 2-1-m are provided for transferring, copying, and exchanging. In other words, normally, a part of the real-time memories 2-1 to 2-n is not used for transmission service of data but for transferring, copying, or exchanging data. Also, a part of input/output lines 2-1-1 to 2-1-m are not used for transmission service.

In the above-mentioned description, transferring, copying, or exchanging data is performed through the real-time reproduction circuit 11a, 11b, and 11c. However, in this case, because transferring, copying, or exchanging is carried out between two main memory 7, it is not necessary to reproduce data in real-time base. Thus, outputs of the temporary memories 10a, 10b, 10c are directly transferred to the transmission circuits 3-1 to 3-n. This circuit has an advantage that time period for transmitting data becomes shorter. Moreover, data also can be transmitted as follows:
Outputs of the temporary memories 10a, 10b, and 10c are transferred to the transmission circuits 3-1 to 3-n directly. Time-division-multiplex transmission system is used for transmission of data to the terminal 6 and the real-time reproduction circuits 11a, 11b, and 11c are provided to the terminal 6.

Hereinbelow will be described operation of the control circuit 4c.

At first, the control circuit 4c makes indexes for every data in every real-time memory 2-1 to 2-n. Next, when transmission demand from one of the terminals 6 occurs, the control circuit 4c, in response to this, searches the desired file in accordance with the above-mentioned indexes and sends the control signal 18c a transmission command to the determined real-time memory 2-1 to 2-n and at this moment counts up the number of access to the desired real-time memory and the number of the desired data by the terminals 6.

For obtaining the number of transmission demands, counting means is provided to the control circuit 4c with each counting means corresponding to each real-time memory 2-1 to 2-n and to each file. When a transmission demand for a desired file is received, the control circuit 4c counts up the counting means for the real-time memory 2-1 to 2-n storing the file. On the other hand, when transmission of the data of the file is finished in response to the finish of reading signal 15 the counting means for the real-time memory storing the file is counted down. As mentioned above, the number of present access to respective real-time memories 2-1 to 2-n and to files stored therein, i.e., the number of transmission demand is obtained.

Here, the control circuit 4c executes averaging the number of access when the following conditions occur:

Condition 1.: frequency of transmission demand os the real time memory exceeds the reference value r₄.

Condition 2.: frequency of transmission demand of the file exceeds the reference value r₅.

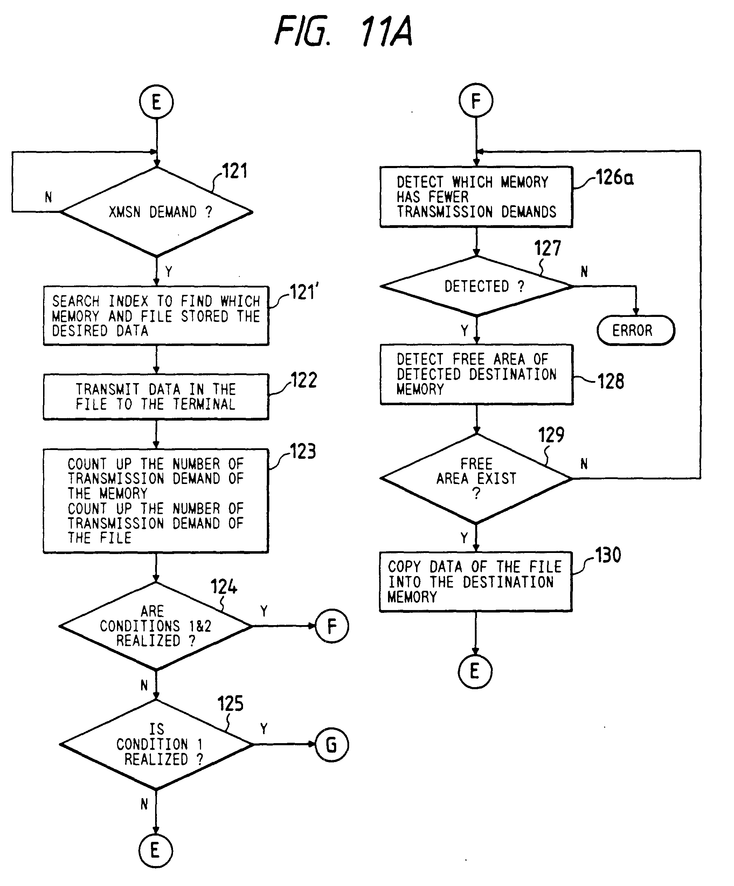

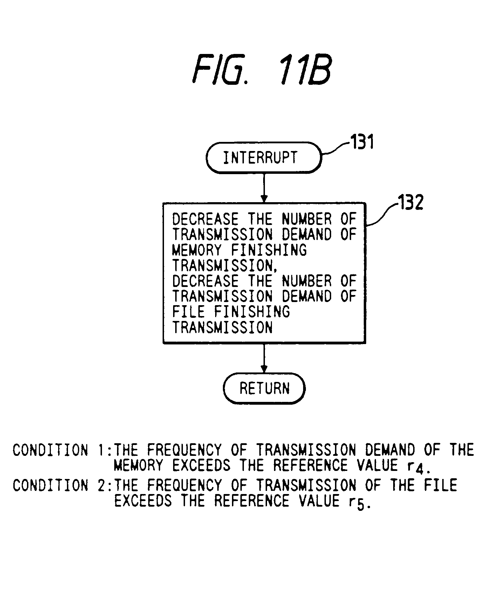

When the conditions 1 and 2 are realized together, the control circuit 4c copies the file of the real-time memory 2-1 to 2-n which has excess demand into another real-time memory 2-1 to 2-n with fewer transmission demands. This causes that the same data is stored dispersively among plural real-time memories 2-1 to 2-n. The control circuit 4c outputs a control signal 18c so that the dispersively stored data is transmitted from a real-time memory 2-1 to 2-n with fewer transmission demands. In other words, the control circuit 4c starts the processing at 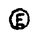 of a flow chart in Fig. 11A. Processing proceed through steps 121, 121', 122, 123 to step 124. In step 124, when the conditions 1 and 2 are realized, processing proceeds to process 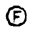 . In step 123, the control circuit 4c counts up frequency of transmission demand of the real-time memory 2-1 to 2-n and the desired file where transmission starts. On the other hand, when transmission of the above-mentioned file is finished, the real-time memory sends the finish of reading signal 15 to the control circuit 4c. Then processing enters interrupt process 131. Then the cpu count down the transmission counts of real-time memory 2-1 to 2-n and file which are used for transmission so that the counts indicate frequency of the present transmission demand.

When processing proceeds to process 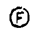 , in step 126a, the cpu detects which real-time memory 2-1 to 2-n has fewer frequency of transmission demand. This real-time memory is a destination. In step 127, processing is branched off. If a destination real-time memory cannot be detected, processing proceeds to an error processing. If detected, processing proceeds to step 128. Next, the cpu detects whether a free area exists in the main memory 7. If there is no free area, processing returns to step 126a. If there is a free area, processing proceeds to step 130. where the cpu copies the data of the desired file into the destination real-time memory 2-1 to 2-n and returns to process 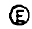 .

When the circumstance matches only condition 1, the control circuit 4c detects which real-time memory shows fewer transmission demands to determine a destination and detects which file shows many transmission demands in the real-time memory 2-1 to 2-n including desired file. The control circuit 4c can decrease frequency of transmission demand of the real-time memory including desired file, with many transmission demands as follows:

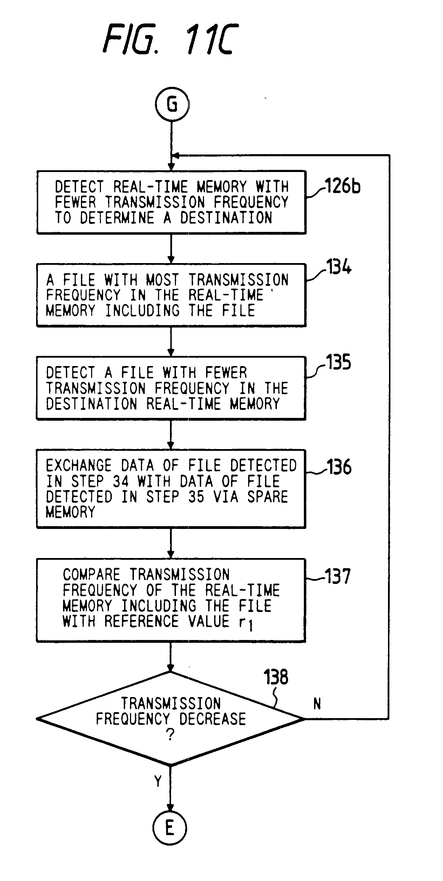

The control circuit 4c exchanges the file with many transmission frequency in the detected real-time memory 2-1 to 2-n showing many transmission demands including the desired file with a file with fewer transmissions in the real-time memory 2-1 to 2-n showing fewer transmission demands. In other words, processing starts at 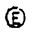 in flow chart in Fig. 11A and processing proceeds through steps 121, 121', 122, 123, and 124 to step 125. In step 125, if the circumstance matches the condition 1, processing enters processing 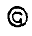 in Fig. 11C and executes processing of steps 126b, 134, 135, 136, and 137 for reducing the number of transmission demand of the real-time memory 2-1 to 2-n showing many transmission demands. After this, if frequency of transmission demand does not decrease to a sufficient level, the above-mentioned processing is repeated. In other words, in step 137, the cpu detects frequency of transmission demand of the detected real-time memory 2-1 to 2-n. If the number of transmission demand is smaller than the reference value r₁ in step 138, processing returns to process 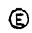 . If not smaller, processing returns to step 126b to repeat the same process.

Transferring data is carried out actually by copying the data and dealing the file of source as free area. Exchange of data is carried out by copying data into a free area of source or destination real-time memory 2-1 to 2-n. The file of source is deleted. If there is no free area, copy is carried out through the spare memory.

If plural files of the same data exist among real-time memories 2-1 to 2-n, i.e., same data is copied, the control circuit 4c deletes a file including copied data when frequency of transmission demand for a given interval decreases, i.e., access frequency lowers under the reference value r₅. In other words, the control circuit 4c deals the file as free area. As mentioned above, the filing apparatus of fourth embodiment prevents overflow of transmission demand, i.e., occurrence of waiting time by that the real-time memories 2-1 to 2-n have no excessive data. Access frequency for a given interval is obtained as follows:

When frequency of access is counted, the control 4c starts to operate a timer included in the cpu, to which a given interval is set. When the given interval has passed, the above-mentioned the number of access is contend down as described in the first embodiment.

As mentioned above, it is possible to provide a filing apparatus of the fourth embodiment can increase efficiency of transmission of data on the whole by preventing access from concentrating in the same real-time memory 2-1 2-n by changing arrangement of data in accordance with the number of access from the terminals.

## Claims

1. A data handling apparatus comprising (Figs 9, 10) :
plural filing units (2-1, 2-2, ..., 2-n) each responsive to first and second control signals (18c) and control means (4c) for controlling said plural file units by generating said first and second control signals; wherein:
each of said filing units has:
storing means (7) for storing plural sets of data;
reading means (2a) for reading out desired data from said storing means (7) in response to said first control signal, said reading means reading out plural sets of data in substantially the same period by time division multiplexing; and
writing means (19a, 19b, 19c) responsive to said second control signal for writing to said storing means (7) data that has been read out for the storing means of another filing unit;
an wherein said control means (4c) is adapted to perform repetitively the steps of:
maintaining an index for each filing unit (2-1, 2-2, ..., 2-n) by storing the name of data that has been written into the respective storing means;
detecting the receipt of an external signal demanding desired data;
sending said first control signal (18c) to one of said filing units (2-1, 2-2,..., 2-n) indicated by said indices to have said desired data stored therein;
detecting a first frequency representing the number of times said external signal demanding said desired data is received in a given interval;
detecting a second frequency representing the number of times said first control (18c) signal is sent to said one of said filing units (2-1, 2-2, ..., 2-n) in a given interval; and
when said first and second frequencies respectively exceed first and second frequency values sending said second control signal to another of said filing units (2-1, 2-2, ..., 2-n) to control storage therein of said data read out from said one filing unit.

2. A data handling apparatus according to claim 1, wherein said reading means further comprises time-expanding means for time-expanding said plural sets of desired data from said storing means so that each time-divided data is continuously output.

3. A data handling apparatus according to claim 1 or 2, wherein said frequency is determined at intervals.

4. A data handling apparatus according to claim 1, 2 or 3, wherein:
said reading means further produces a finish signal indicative of finish of reading said desired data;
said frequency of receiving said external signal demanding for said desired data is detected by counting up in response to said external signal and counting down in response to said finish signal; and
said frequency of receiving said external signal demanding for each filing unit storing said desired data is detected by counting up in response to said external signal and counting down in response to said finish signal.

5. A data handling apparatus according to any one of claims 1 to 3, wherein said control means is adapted, when said first frequency is equal to or lower than a first frequency value and said second frequency of said one of said filing units is greater than a second frequency value, to detect first data whose said first frequency is the highest in said one of said filing unit; to detect a second filing unit whose said second frequency is lower than that of said one of said filing units; to detect second data in said second filing unit whose said first frequency is lower than that of said first data; and
to produce said first and second control signals and send them to said one of said filing units and said second filing unit respectively to exchange said first data with said second data.

6. A data handling apparatus according to claim 5, wherein said first frequency is determined at every given first interval and said second frequency is determined at every given second interval.

7. A data handling apparatus according to claim 5 or 6, wherein:
said reading means further produces a finish signal indicative of finish of reading said desired data;
said first frequency of receiving said external signal demanding for said desired data is detected by counting up in response to said external signal and counting down in response to said finish signal;
said second frequency of each filing unit storing said desired data is detected by counting up in response to said first signal and counting down in response to said finish signal.

8. A data handling apparatus according to any one of the preceding claims, wherein distributing means (3a) is responsive to a third control signal for distributing said sets of data to plural output lines such that same data may be sent to two or more of said output lines according to said third control signal; and wherein said control means (4a, 4b) is adapted when said first frequency is larger than a third value to count said external signals and, when said count of said external signal is larger than a fourth value, to produce said first control signal and at the same time to produce said third control signal to effect desired distribution; and when said count is equal to or less than said fourth value and a second interval is passed from when said first frequency becomes larger than said third value, said first control signal is produced and at the same time said third control signal is produced to effect desired distribution.

## Patentansprüche

1. Datenverarbeitungsgerät, aufweisend (Fig. 9, 10):
mehrere Ablageeinheiten (2-1, 2-2, ..., 2-n), die jeweils auf erste und zweite Steuersignale (18c) ansprechen, und ein Steuermittel (4c) zum Steuern der mehreren Dateieinheiten durch Erzeugen der ersten und zweiten Steuersignale, worin:
jede der Ablageeinheiten aufweist:
ein Speichermittel (7) zum Speichern mehrerer Datensätze;
ein Lesemittel (2a) zum Auslesen gewünschter Daten aus dem Speichermittel (7) als Antwort auf das erste Steuersignal, wobei das Lesemittel mehrere Datensätze in im wesentlichen der gleichen Zeitspanne durch Zeitmultiplexieren ausliest; und
auf das zweite Steuersignal ansprechende Schreibmittel (19a, 19b, 19c) zum Schreiben von Daten, die für das Speichermittel einer anderen Ablageeinheit ausgelesen worden sind, in das Speichermittel (7);
und worin das Steuermittel (4c) dafür eingerichtet ist, wiederholt die Schritte auszuführen:
Halten eines Index für jede Ablageeinheit (2-1, 2-2, ..., 2-n) durch Speichern des Namens von Daten, die in das jeweilige Speichermittel geschrieben worden sind;
Feststellen des Empfangs eines externen Signals, das gewünschte Daten anfordert;
Senden des ersten Steuersignals (18c) an eine der Ablageeinheiten (2-1, 2-2, ..., 2-n), die laut Anzeige durch die Indizes die gewünschten Daten darin gespeichert aufweisen;
Feststellen einer ersten Frequenz, die die Anzahl von Zeitpunkten repräsentiert, zu denen das die gewünschten Daten anfordernde externe Signal in einem gegebenen Intervall empfangen wird;
Feststellen einer zweiten Frequenz, die die Anzahl von Zeitpunkten repräsentiert, zu denen das erste Steuersignal (18c) an die eine der Ablageeinheiten (2-1, 2-2..., 2-n) in einem gegebenen Intervall gesendet wird; und
wenn die erste und zweite Frequenz einen ersten bzw.
zweiten Frequenzwert übersteigen, Senden des zweiten Steuersignals an eine andere der Ablageeinheiten (2-1, 2-2, ..., 2-n), um eine Speicherung der aus der einen Ablageeinheit ausgelesenen Daten darin zu steuern.

2. Datenverarbeitungsgerät nach Anspruch 1, worin das Lesemittel ferner ein Zeitdehnungsmittel zum Zeitdehnen der mehreren Sätze gewünschter Daten von dem Speichermittel aufweist, so daß alle zeitgeteilten Daten kontinuierlich ausgegeben werden.

3. Datenverarbeitungsgerät nach Anspruch 1 oder 2, worin die Frequenz in Intervallen bestimmt wird.

4. Datenverarbeitungsgerät nach Anspruch 1, 2 oder 3, worin:
das Lesemittel ferner ein Beendigungssignal erzeugt, das eine Beendigung eines Lesens der gewünschten Daten anzeigt;
die Frequenz eines Empfangs des die gewünschten Daten anfordernden externen Signals festgestellt wird, indem als Antwort auf das externe Signal hochgezählt und als Antwort auf das Beendigungssignal heruntergezählt wird; und
die Frequenz eines Empfangs des jede die gewünschten Daten speichernde Ablageeinheit anfordernden externen Signals festgestellt wird, indem als Antwort auf das externe Signal hochgezählt und als Antwort auf das Beendigungssignal heruntergezählt wird.

5. Datenverarbeitungsgerät nach einem der Ansprüche 1 bis 3, worin das Steuermittel dafür eingerichtet ist, wenn die erste Frequenz gleich einem ersten Frequenzwert oder niedriger ist und die zweite Frequenz der einen der Ablageeinheiten größer als ein zweiter Frequenzwert ist, die ersten Daten festzustellen, deren erste Frequenz die höchste in der einen der Ablageeinheiten ist; eine zweite Ablageeinheit festzustellen, deren zweite Frequenz niedriger als diejenige der einen der Ablageeinheiten ist; zweite Daten in der zweiten Ablageeinheit festzustellen, deren erste Frequenz niedriger als die der ersten Daten ist; und
die ersten und zweiten Steuersignale zu erzeugen und sie an die eine der Ablageeinheiten bzw. die zweite Ablageeinheit zu senden, um die ersten Daten mit den zweiten Daten auszutauschen.

6. Datenverarbeitungsgerät nach Anspruch 5, worin die erste Frequenz zu jedem gegebenen ersten Intervall bestimmt wird und die zweite Frequenz zu jedem gegebenen zweiten Intervall bestimmt wird.

7. Datenverarbeitungsgerät nach Anspruch 5 oder 6, worin:
das Lesemittel ferner ein Beendigungssignal erzeugt, das eine Beendigung eines Lesens der gewünschten Daten anzeigt;
die erste Frequenz eines Empfangs des die gewünschten Daten anfordernden externen Signals festgestellt wird, indem als Antwort auf das externe Signal hochgezählt und als Antwort auf das Beendigungssignal heruntergezählt wird;
die zweite Frequenz jeder die gewünschten Daten speichernden Ablageeinheit festgestellt wird, indem als Antwort auf das erste Signal hochgezählt und als Antwort auf das Beendigungssignal heruntergezählt wird.

8. Datenverarbeitungsgerät nach einem der vorhergehenden Ansprüche, worin ein Verteilungsmittel (3a) auf ein drittes Steuersignal anspricht, um die Datensätze auf mehrere Ausgabeleitungen so zu verteilen, daß gleiche Daten an zwei oder mehr der Ausgabeleitungen gemäß dem dritten Steuersignal gesendet werden können; und worin das Steuermittel (4a, 4b) dafür eingerichtet ist, die externen Signale zu zählen, wenn die erste Frequenz größer als ein dritter Wert ist, und, wenn die Zählung des externen Signals größer als ein vierter Wert ist, das erste Steuersignal zu erzeugen und gleichzeitig das dritte Steuersignal zu erzeugen, um eine gewünschte Verteilung zu bewerkstelligen; und, wenn die Zählung gleich dem vierten Wert oder niedriger ist und ein zweites Intervall von dem Zeitpunkt an, wenn die erste Frequenz größer als der dritte Wert wird, verstrichen ist, das erste Steuersignal erzeugt wird und zur gleichen Zeit das dritte Steuersignal erzeugt wird, um eine gewünschte Verteilung zu bewerkstelligen.

## Revendications

1. Dispositif de traitement de données comprenant (figures 9, 10):
plusieurs modules de classement (2-1, 2-2, ..., 2-n) répondant chacun à des premier et second signaux de commande (18c), et un moyen de commande (4c) pour commander lesdits plusieurs modules de classement par génération desdits premier et second signaux de commande; dans lequel:
chacun desdits modules de classement comprend:
un moyen de mémorisation (7) pour mémoriser plusieurs ensembles de données;
un moyen de lecture (2a) pour lire des données désirées dans ledit moyen de mémorisation (7) en réponse audit premier signal de commande, ledit moyen de lecture lisant plusieurs ensembles de données en sensiblement la même période de temps par multiplexage temporel; et
un moyen d'écriture (19a, 19b, 19c) répondant audit second signal de commande pour écrire dans ledit moyen de mémorisation (7) des données ayant été lues dans le moyen de mémorisation d'un autre module de classement;
et dans lequel ledit moyen de commande (4c) est apte à exécuter de façon répétitive les étapes consistant à:
conserver un index pour chaque module de classement (2-1, 2-2, ..., 2-n) par mémorisation du nom des données ayant été écrites dans le moyen de mémorisation respectif;
détecter la réception d'un signal extérieur demandant des données désirées;
envoyer ledit premier signal de commande (18c) à un premier desdits modules de classement (2-1, 2-2, ..., 2-n) que ledit index désigne comme contenant lesdites données désirées;
détecter une première fréquence représentant le nombre de fois que ledit signal extérieur demandant lesdites données désirées est reçu en un intervalle de temps donné;
détecter une seconde fréquence représentant le nombre de fois que ledit premier signal de commande (18c) est envoyé audit premier module de classement (2-1, 2-2, ..., 2-n) en un intervalle de temps donné; et
quand lesdites première et seconde fréquences dépassent respectivement des première et seconde valeurs de fréquence, envoyer ledit second signal de commande à un autre desdits modules de classement (2-1, 2-2, ..., 2-n) pour commander une mémorisation dedans desdites données lues dans ledit premier module de classement.

2. Dispositif de traitement de données selon la revendication 1, dans lequel ledit moyen de lecture comprend en outre un moyen de décompression dans le temps pour décomprimer dans le temps lesdits plusieurs ensembles de données désirées provenant dudit moyen de mémorisation, de façon à fournir continûment en sortie chaque ensemble de données réparties dans le temps.

3. Dispositif de traitement de données selon la revendication 1 ou 2, dans lequel ladite fréquence est déterminée à intervalles réguliers.

4. Dispositif de traitement de données selon l'une quelconque des revendications 1 à 3, dans lequel:
ledit moyen de lecture génère en outre un signal de fin indiquant la fin de la lecture desdites données désirées;
ladite fréquence de réception dudit signal extérieur demandant lesdites données désirées est détectée par comptage progressif en réponse audit signal extérieur et comptage régressif en réponse audit signal de fin; et
ladite fréquence de réception dudit signal extérieur adressé à chaque module de classement contenant lesdites données désirées est détectée par comptage progressif en réponse audit signal extérieur et comptage régressif en réponse audit signal de fin.

5. Dispositif de traitement de données selon l'une quelconque des revendications 1 à 3, dans lequel ledit moyen de commande est apte, quand ladite première fréquence est inférieure ou égale à une première valeur de fréquence et ladite seconde fréquence dudit premier module de classement est supérieure à une seconde valeur de fréquence, à détecter dans ledit premier module de classement des premières données dont ladite première fréquence est la plus élevée; à détecter un second module de classement dont ladite seconde fréquence est inférieure à celle dudit premier module de classement; à détecter dans ledit second module de classement des secondes données dont ladite première fréquence est inférieure à celle desdites premières données; et
à générer lesdits premier et second signaux de commande pour les envoyer audit premier module de classement et audit second module de classement respectivement afin d'échanger lesdites premières données avec lesdites secondes données.

6. Dispositif de traitement de données selon la revendication 5, dans lequel ladite première fréquence est déterminée à chaque premier intervalle de temps donné et ladite seconde fréquence est déterminée à chaque second intervalle de temps donné.

7. Dispositif de traitement de données selon la revendication 5 ou 6, dans lequel:
ledit moyen de lecture génère en outre un signal de fin indiquant la fin de la lecture desdites données désirées;
ladite première fréquence de réception dudit signal extérieur demandant lesdites données désirées est détectée par comptage progressif en réponse audit signal extérieur et comptage régressif en réponse audit signal de fin;
ladite seconde fréquence de chaque module de classement contenant lesdites données désirées est détectée par comptage progressif en réponse audit premier signal et comptage régressif en réponse audit signal de fin.

8. Dispositif de traitement de données selon l'une quelconque des revendications précédentes, dans lequel un moyen de répartition (3a) répond à un troisième signal de commande pour répartir lesdits ensembles de données sur plusieurs lignes de sortie, de façon à pouvoir envoyer les mêmes données sur deux ou plus desdites lignes de sortie, conformément audit troisième signal de commande; et dans lequel ledit moyen de commande (4a, 4b) est apte, quand ladite première fréquence est supérieure à une troisième valeur, à compter lesdits signaux extérieurs et, lorsque le compte de signaux extérieurs est supérieur à une quatrième valeur, à générer ledit premier signal de commande et à générer simultanément ledit troisième signal de commande pour effectuer une répartition désirée; et lorsque ledit compte est inférieur ou égal à ladite quatrième valeur et un second intervalle de temps s'est écoulé depuis que ladite première fréquence a dépassé ladite troisième valeur, à générer ledit premier signal de commande et à générer simultanément ledit troisième signal de commande pour effectuer une répartition désirée.
